# FASCICULE DE BREVET EUROPEEN

(11) **EP 2 409 352 B1**
(45) Date de publication et mention de la délivrance du brevet: **05.11.2014**
(21) Numéro de dépôt: 10707022.9
(22) Date de dépôt: 04.03.2010
(51) Int. Cl.: H01M 6/18, H01M 6/40, H01M 10/0562, H01M 10/0585

(54) **Microbatterie au lithium et son procédé de fabrication**
Lithium-Mikrobatterie und Herstellungsverfahren dafür
Lithium microbattery and method for the production thereof

(30) Priorité: 16.03.2009 FR 0901217
(43) Date de publication de la demande: 25.01.2012
(73) Titulaire: Commissariat à l'Énergie Atomique et aux Énergies Alternatives, 75015 Paris (FR)
(72) Inventeur: OUKASSI, Sami, F-38120 Saint-Egrève (FR); SALOT, Raphaël, F-38250 Lans-en-Vercors (FR); DUNOYER, Nicolas, F-38000 Grenoble (FR); MARTIN, Steve, F-38160 Saint-Sauveur (FR)
(74) Mandataire: Gris, Sébastien
(86) Numéro de dépôt international: PCT/EP2010/052778
(87) Numéro de publication internationale: WO 2010/105917

(56) Documents cités:
- WO-A1-01/73873
- WO-A1-2008/011061
- FR-A1- 2 430 103
- US-A1- 2008 153 000

## Description

### Domaine technique de l'invention

L'invention concerne une microbatterie au lithium formée d'un empilement de couches minces solides sur un substrat. L'empilement comporte, successivement et en partant du substrat, une première électrode, un électrolyte solide et un ensemble seconde électrode/collecteur de courant formé d'au moins une couche mince, une première face et une seconde face de l'électrolyte étant en contact, respectivement, avec une face principale de la première électrode et une face principale de l'ensemble seconde électrode/collecteur de courant. Les faces principales sont en regard l'une par rapport à l'autre et les dimensions de la face principale de la première électrode (14) sont inférieures aux dimensions de la face principale de l'ensemble.

L'invention concerne également un procédé de fabrication d'une telle microbatterie.

### État de la technique

Les microbatteries au lithium, également appelées batteries "tout solide", sont des accumulateurs qui comportent deux électrodes mettant en jeu du lithium. Il existe également des systèmes hybrides qui ne comportent qu'une seule électrode mettant en jeu du lithium. Les microbatteries au lithium reposent sur le principe d'insertion et de désinsertion d'ions Li⁺ dans au moins une électrode. Généralement, l'électrode positive comporte au moins un matériau capable d'insérer dans sa structure un certain nombre de cations Li⁺.

Les microbatteries au lithium sont particulièrement intéressantes du fait de leur forte densité massique, leur surface de stockage utile d'énergie élevée et leur faible toxicité. Néanmoins, ces microbatteries au lithium sont très sensibles à l'air et en particulier à l'humidité. Afin de protéger l'empilement actif de la microbatterie au lithium, une encapsulation est généralement réalisée afin d'isoler l'empilement du contact extérieur et d'éviter ainsi toute contamination provenant de l'environnement.

Les microbatteries se présentent sous la forme d'un empilement de couches minces solides, déposées successivement sur un substrat par des techniques conventionnelles de l'industrie de la microélectronique notamment par dépôt physique en phase vapeur ("physical vapor déposition", PVD), dépôt chimique en phase vapeur ("chemical vapor déposition", CVD).

L'architecture de la microbatterie au lithium est alors réalisée par gravure de motifs sur les différentes couches minces constituant l'empilement. La définition des motifs de la microbatterie au lithium est réalisée selon deux principaux procédés. Un premier procédé de masquage mécanique dans lequel le matériau actif constituant la couche mince est déposé à travers des masques de type pochoir. Ces derniers sont généralement métalliques et destinés à définir la forme définitive des différents éléments constitutifs de la microbatterie. Généralement, peu efficace pour le masquage de microbatteries de taille réduite, notamment à dimensions millimétriques, le masquage mécanique induit également des risques de contamination particulaire et de détérioration de la couche mince. Avec une mise en oeuvre complexe, ce procédé n'est pas à la hauteur des exigences de rendement de l'industrie. De plus, ce procédé de masquage ne répond, également, pas aux spécifications dimensionnelles des futures générations de circuits intégrés et est, par conséquent, peu adapté à une application dans le domaine de la microélectronique.

Le second procédé est un procédé de microfabrication qui met en oeuvre des briques technologiques issues du domaine de la microélectronique. Ce procédé consiste à déposer, pleine plaque, le matériau constituant la couche mince puis à réaliser, sur la couche mince, un masque par photolithographie et enfin à transférer le motif dans la couche mince par gravure à travers le masque. La photolithographie consiste à appliquer une photorésine sous forme d'une couche mince sur la surface d'une couche cible par exemple du silicium ou du dioxyde de silicium, puis à l'exposer à une radiation lumineuse. Un développeur permet d'éliminer ensuite la photorésine insolée (résine positive) ou non insolée (résine négative) et de mettre ainsi à nu certaines parties de la couche cible. Bien que ce procédé de microfabrication permette de repousser les limites dimensionnelles et d'augmenter la résolution des motifs, elle reste complexe avec l'utilisation de plusieurs niveaux de masques et de solutions non-aqueuses parfois incompatibles avec les matériaux actifs de l'empilement. Ces inconvénients se traduisent généralement par une détérioration des interfaces fonctionnelles entre les différentes couches constituant l'empilement.

Or, comme le souligne E. J. Jeon et al., dans leur article "Characterization of All-Solid-State Thin-Film Batteries with V2O5 Thin-Film Cathodes Using Ex Situ and In Situ Processes" (Journal of The Electrochemical Society, 2001, 148 (4), P. A318-A322), les propriétés électrochimiques d'une microbatterie sont intimement liées à sa structure et, en particulier, à la qualité de l'interface entre la couche mince, par exemple de pentoxyde de vanadium (V₂O₅), constituant l'électrode positive et la couche mince, par exemple en oxynitrure de phosphose et de lithium (LiPON), formant l'électrolyte.

Différentes architectures de microbatteries existent, notamment des architectures à électrodes symétriques et dissymétriques.

Une microbatterie à structure symétrique comporte un empilement formé d'une cathode, d'un électrolyte solide et d'une anode au lithium. L'électrolyte en contact avec l'électrode négative et l'électrode positive forme respectivement une première interface et une seconde interface. Les dimensions de la première et de la seconde interface sont identiques et caractérisent la microbatterie symétrique. Une telle microbatterie avec des dimensions de première et de seconde interfaces identiques est, par exemple, décrite dans le document US-A-5314765.

L'architecture dissymétrique la plus répandue à l'heure actuelle se caractérise par des dimensions de première et de seconde interfaces différentes.

Les documents US-A-2008153000 et WO0173873 décrivent, par exemple, un ensemble pour accumulateur au lithium avec une couche d'électrolyte en contact avec le substrat.

En particulier, le document US-A-2008032236 décrit notamment une microbatterie à électrode dissymétrique, représentée à la figure 1, comportant sur un substrat 1 un empilement 2 constitué, successivement, d'un premier collecteur de courant 3, d'une première électrode 4 recouverte par un électrolyte solide 5, d'une seconde électrode 6 et d'un second collecteur de courant 7. L'électrolyte solide 5 s'étend au-delà du périmètre de la première électrode 4 de façon à déborder de chaque côté de la première électrode 4 et à recouvrir entièrement ses bords latéraux. L'empilement 2 est encapsulé par un revêtement 8 inerte vis-à-vis des éléments constitutifs de l'empilement 2 et destiné à le rendre étanche et à le protéger contre les contaminations externes. Il est alors possible de déplacer et stocker à l'air libre la microbatterie au lithium sans risquer de l'endommager. Une reprise de contact est ensuite effectuée par dépôt d'une couche métallique 9 sur le revêtement 8 et couplage avec le second collecteur de courant 7 par l'intermédiaire d'un trou traversant réalisé dans le revêtement 8. Cette architecture dissymétrique permet de maîtriser les résistances interfaciales et les contraintes mécaniques liées à l'expansion volumique des électrodes, en jouant sur les dimensions des électrodes et leur position dans l'empilement 2. Ainsi, on choisira de placer les électrodes dans l'empilement 2 de façon à ce que l'interface électrode/électrolyte soit la plus importante pour l'électrode ayant la plus faible résistance interfaciale avec l'électrolyte solide 5. De même, l'électrode soumise à l'expansion volumique la moins importante constituera la première électrode recouverte par l'électrolyte solide 5.

Néanmoins, l'architecture dissymétrique de l'art antérieur présente également des inconvénients. L'électrolyte solide 5 qui recouvre la première électrode 4 établit un contact avec une partie de la surface de premier collecteur de courant 3 ou du substrat 1. Ce contact entraîne une diminution des performances de la microbatterie. Cette défaillance provient de la réaction plus ou moins importante selon la nature de l'électrolyte, de ce dernier avec le substrat 1 ou avec le premier collecteur de courant 3. On constate, par ailleurs, un phénomène de diffusion non contrôlée des espèces mises en jeu dans les réactions électrochimiques, de l'électrolyte 5 vers le substrat 1 ou le premier collecteur de courant 3.

D'autres inconvénients affectent les performances des microbatteries dissymétriques. En particulier, on constate à l'usage, l'apparition de dommages mécaniques des éléments constitutifs de la microbatterie notamment de l'électrolyte solide 5. Le fonctionnement de microbatterie au lithium étant basé sur le transport du courant par les ions lithium, lors de la charge et de la décharge de la microbatterie, les électrodes subissent des déformations dues à l'insertion et l'extraction, également appelé désinsertion, des ions lithium dans les électrodes. Ces modifications répétées de volume entraînent rapidement des dommages mécaniques. L'électrolyte solide 5 qui recouvre entièrement la première électrode 4 est, plus particulièrement, assujetti à ces déformations volumiques et risque de craquer, se fissurer ou se délaminer.

### Objet de l'invention

L'objet de l'invention a pour but de réaliser une microbatterie et le procédé de fabrication d'une telle microbatterie remédiant aux inconvénients de l'art antérieur.

En particulier, l'invention a pour but une microbatterie au lithium performante présentant un rendement de stockage de l'énergie optimisé, une résistance électrique modérée et une longue durée de vie. La microbatterie est destinée à être fabriquée selon un procédé de fabrication industriel, facile à mettre en oeuvre, économiquement viable et compatible avec les technologies mises en oeuvre dans le domaine de la microélectronique.

Selon l'invention, ce but est atteint par une microbatterie au lithium et son procédé de fabrication selon les revendications indexées.

En particulier, ce but est atteint par une microbatterie au lithium dont les dimensions de la première face de l'électrolyte solide sont inférieures aux dimensions de la seconde face de l'électrolyte solide et par le fait que l'électrolyte solide n'est pas en contact avec le substrat.

Selon un mode de réalisation préférentiel, la première électrode ayant au moins une face latérale, aucune face latérale 14a n'est entièrement recouverte par l'électrolyte solide.

Selon un mode de réalisation préférentiel, l'électrolyte a, en coupe, une forme trapézoïdale avec une petite base et une grande base constituant, respectivement, la première et la seconde face de l'électrolyte.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente, schématiquement et en coupe, une microbatterie au lithium selon l'art antérieur.
La figure 2 représente, schématiquement et en coupe, une microbatterie au lithium selon un mode de réalisation particulier de l'invention.
Les figures 3 et 4 représentent, schématiquement et en coupe, une microbatterie au lithium selon deux autres modes de réalisation particuliers.
Les figures 5 à 9 représentent, schématiquement et en coupe, différentes étapes de formation d'une microbatterie au lithium selon la figure 2.
La figure 10 représente une courbe du cyclage galvanostatique obtenue pour une microbatterie au lithium selon l'invention.

### Description de modes particuliers de réalisation.

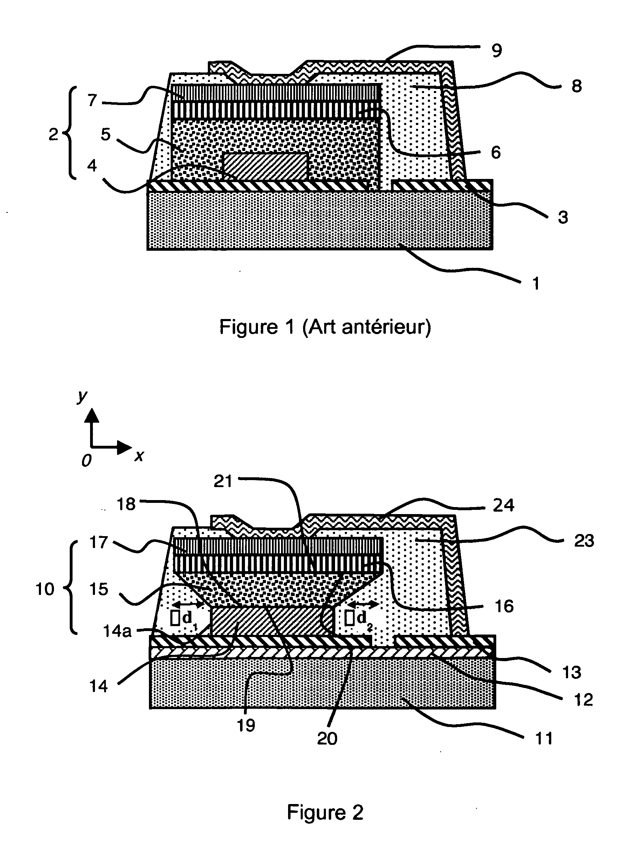

En référence à la figure 2, la microbatterie est formée d'un empilement 10 sur un substrat 11. L'empilement 10 est formé de couches minces ayant, avantageusement, une épaisseur inférieure à 50µm, de préférence inférieure à 10µm. La limite inférieure de l'épaisseur d'une couche mince est, de préférence, de l'ordre de l'épaisseur d'une couche atomique c'est-à-dire de l'ordre de quelques nanomètres.

Le substrat 11 peut être une plaque en silicium ou une plaque en silicium contenant un circuit intégré à la demande, également appelée circuit ASIC ("Application Specific Integrated Circuit"). Le substrat 11 peut également être recouvert par une couche de passivation 12 constituée par un diélectrique comme le dioxyde de silicium (SiO₂) ou par une bicouche constituée successivement d'une couche de SiO₂ et d'une couche de nitrure de silicium (Si₃N₄). L'empilement 10 comporte successivement un collecteur de courant 13, une première électrode 14, un électrolyte solide 15 et un ensemble seconde électrode 16/collecteur de courant 17. L'ensemble seconde électrode 16 /collecteur de courant 17 est formé d'au moins une couche mince.

Selon un premier mode de réalisation particulier, l'ensemble seconde électrode 16 /collecteur de courant 17 comporte une couche mince constituant la seconde électrode 16 et une couche mince constituant le collecteur de courant 17. Comme représenté à la figure 2, le collecteur de courant 17 est formé sur la seconde électrode 16 et l'électrolyte solide 15 est disposé entre la première électrode 14 et la seconde électrode 16.

Les collecteurs de courant 13 et 17 sont, classiquement, métalliques, par exemple en platine (Pt), chrome, (Cr), or (Au), titane (Ti), tungstène (W) ou molybdène (Mo).

La première électrode 14 peut être, par exemple, une électrode positive à la décharge (cathode) et la seconde électrode 16, une électrode négative à la décharge (anode).

Néanmoins, une architecture où la première électrode 14 est une électrode négative et la seconde électrode 16 une électrode positive peut également être envisagée.

Les matériaux utilisés comme matériaux actifs de la première électrode 14 peuvent être soit des matériaux non lithiés comme, par exemple, les sulfures ou disulfures de cuivre (Cu ou CuS₂), les oxysulfures de tungstène (WO_{y}S_{z}), les disulfures de titane (TiS₂), les oxysulfures de titane (TiOₓS_{y}) ou les oxydes de vanadium (VₓO_{y}) soit des matériaux lithiés comme, par exemple, les oxydes mixtes à base de lithium tels que l'oxyde de lithium et de cobalt (LiCoO₂), l'oxyde de lithium et de nickel (LiNiO₂), l'oxyde de lithium et de manganèse (LiMn₂O₄), le pentoxyde de lithium et de vanadium (LiV₂O₅) ou le phosphate de lithium et de fer (LiFePO₄).

La seconde électrode 16 est constituée, de préférence, d'un ou de plusieurs matériaux choisis parmi les métaux de transition et leurs alliages, les métalloïdes et leurs alliages et, les matériaux d'intercalation ou d'insertion du lithium. La seconde électrode 16 peut être génératrice d'ions Li⁺ ou bien également comporter un matériau actif d'intercalation du lithium. Les matériaux utilisés comme matériau actif de la seconde électrode 16 peuvent être des matériaux non lithiés comme, par exemple, du silicium (Si) et ses alliages comme l'alliage silicium/germanium (SiGe), l'étain et ses alliages comme l'alliage étain/cuivre (Cu₆Sn₅), le carbone ou un matériau d'intercalation ou d'insertion du lithium choisi parmi les oxynitrures d'étain et de silicium (SiTON), les nitrures d'étain (SnNₓ), les nitrures d'indium (InNₓ), les oxydes d'étain comme le dioxyde d'étain (SnO₂) ou l'oxyde de cobalt (Co₃O₄). Les matériaux utilisés comme matériaux actifs de la seconde électrode 16 peuvent être des matériaux lithiés. Le ou les matériaux constituant la seconde électrode 16 comporte, avantageusement, moins de 30% atomique de lithium. La seconde électrode 16 peut, par exemple, être constituée par un alliage métallique à base de lithium comportant moins de 30% atomique de lithium comme un alliage SiLiₓ ou GeLiₓ ou un oxyde mixte à base de lithium tel que l'oxyde de lithium et de nickel (LiNiO₂).

L'électrolyte solide 15 est constitué par un matériau permettant la conduction des ions lithium Li⁺. On choisira, de préférence, des matériaux isolants électriquement et conducteurs ioniques. L'électrolyte solide 15 est, de préférence, un composé à base de lithium tel qu'un oxynitrure de phosphore et de lithium (LiPON) ou un oxynitrure de phosphosilicate de lithium (LiSiPON).

La seconde électrode 16 et le collecteur de courant 17 sont constitués par un ou plusieurs matériaux peu sensibles à la gravure par voie humide.

Comme représenté à la figure 2, l'électrolyte solide 15 est disposé entre la première électrode 14 formée sur le substrat 11 et la seconde électrode 16.

Le collecteur de courant 13 peut être formé en deux parties (figure 2). La première électrode 14 est alors formée sur une des deux parties du collecteur de courant 13 de sorte qu'elle ne s'étende pas au-delà du périmètre de cette partie de collecteur de courant 13 et qu'elle ne soit pas en contact avec le substrat 11 ou avec la couche de passivation 12 du substrat 11.

Une première face 18 de l'électrolyte 15 est en contact avec une face principale 19 de la première électrode 14 formant une première interface électrolyte/électrode. Une seconde face 20 de l'électrolyte 15 est en contact avec une face principale 21 de l'ensemble seconde électrode 16/collecteur de courant 17 formant une seconde interface électrolyte/électrode. Plus particulièrement, la seconde face 20 de l'électrolyte 15 est en contact avec une face principale 21 de la seconde électrode 16. Les faces principales, respectivement 19 et 21, sont en regard l'une par rapport à l'autre et, par conséquent, parallèles selon la coupe représentée à la figure 2. Les dimensions de la face principale 19 de la première électrode 14 sont inférieures aux dimensions de la face principale 21 de l'ensemble seconde électrode 16/collecteur de courant 17 et, plus particulièrement, aux dimensions de la face principale 21 de la seconde électrode 16.

La première interface électrolyte/électrode est plus petite que la seconde interface électrolyte/électrode. De plus, la première électrode 14 a au moins une face latérale 14a représentée à la figure 2, perpendiculaire à la face principale 19. L'électrolyte solide 15 peut déborder de la face principale 19 mais ne s'étend pas au-delà du périmètre de la première électrode 14 évitant ainsi tout contact entre l'électrolyte solide 15 et le substrat 11 ou la couche de passivation 12 ou le collecteur de courant 13. Lorsqu'un collecteur de courant 13 est disposé entre la première électrode 14 et le substrat 11, l'électrolyte 15 n'est pas en contact avec le collecteur de courant 13. Par ailleurs, lorsque le substrat 11 possède une couche de passivation 12, l'électrolyte 15 n'est pas en contact avec la couche de passivation 12. Par conséquent, l'électrolyte 15 est ni en contact avec le substrat 11 ni avec le collecteur de courant 13 ni avec la couche de passivation 12.

Avantageusement, l'électrolyte solide 15 ne recouvre pas entièrement toute la face latérale 14a de la première électrode 14. En d'autres termes, aucune face latérale 14a n'est entièrement recouverte par l'électrolyte solide 15. Ainsi, pour une première électrode 14 avec plusieurs faces latérales 14a, par exemple en forme de cube, aucune des faces latérales 14a n'est entièrement recouverte par l'électrolyte solide 15.

Selon un mode de réalisation préférentiel, l'électrolyte solide 15 recouvre, avantageusement, la face principale 19 de la première électrode 14 sans déborder sur la ou les faces latérales 14a de la première électrode 14 (côtés droit et gauche de l'électrode 14 à la figure 2). Les dimensions de la première face 18 de l'électrolyte 15 sont sensiblement égales aux dimensions de la face principale 19 de la première électrode 14 et les dimensions de la seconde face 20 de l'électrolyte 15 sont sensiblement égales aux dimensions de la face principale 21 de l'ensemble seconde électrode 16/collecteur de courant 17. En particulier, les dimensions de la seconde face 20 de l'électrolyte 15 sont sensiblement égales aux dimensions de la face principale 21 de la seconde électrode 16.

Les dimensions de la première face 18 de l'électrolyte 15 sont également inférieures aux dimensions de la seconde face 20 de l'électrolyte 15. La seconde interface électrolyte/électrode est alors plus importante que la première interface électrolyte/électrode.

Comme représenté à la figure 2, en coupe, l'électrolyte solide 15 a, avantageusement, une forme trapézoïdale avec une petite base et une grande base constituant, respectivement, une première face 18 de l'électrolyte 15 et une seconde face 20 de l'électrolyte 15. On entend par "trapézoïdale" une forme qui ressemble à un trapèze. En coupe, la petite base du trapèze est plus proche du substrat 11 que la grande base du trapèze. Ainsi, les parois latérales de l'électrolyte 15 (à droite et à gauche à la figure 2) ont une pente négative relativement au repère xOy (figure 2). En outre, bien que l'apparence en coupe de l'électrolyte 14 peut être déformée lorsque l'électrolyte 15 déborde de chaque côté de la première électrode 14, elle n'en conserve pas moins une apparence de trapèze.

Selon le motif de la microbatterie définissant sa forme définitive, l'électrolyte solide 15 a une forme de pyramide inversée ou de cône inversé, à sommet tronqué orienté vers le substrat 11.

Une différence □d entre un diamètre, une largeur ou une longueur de la première face 18 de l'électrolyte 15 et, un diamètre, une largeur ou une longueur correspondant de la seconde face 20 de l'électrolyte 15 est comprise entre 0,2µm et 2000µm. En particulier, pour une section circulaire des première et seconde faces, respectivement 18 et 20, de l'électrolyte 15, la différence □d correspond à une différence entre diamètres. Pour une section en carré, □d correspond à une différence entre longueurs de côté ou, pour une section rectangulaire, à une différence entre largeurs ou entre longueurs. Comme représenté à la figure 2, la différence □d est égale à la somme □d₁ et □d₂. De préférence, la différence □d est répartie uniformément sur tout le contour de l'électrolyte solide 15 c'est-à-dire que la différence □d₁ est égale à □d₂.

L'empilement 10 a une épaisseur, avantageusement, comprise entre 1µm et 10µm.

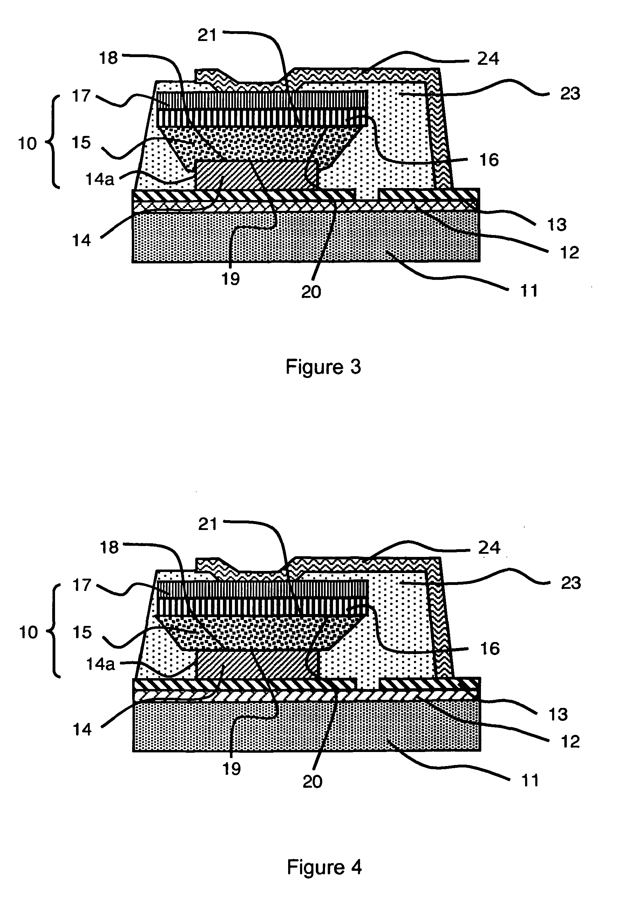

Selon un autre mode de réalisation particulier représenté à la figure 3, l'électrolyte solide 15 recouvre la face principale 19 de la première électrode 14 et déborde sur au moins une face latérale 14a de la première électrode 14 de façon à la recouvrir uniquement en partie. L'électrolyte solide 15 ne recouvre, néanmoins, pas entièrement toute la face latérale 14a de la première électrode 14 afin d'éviter tout contact avec le substrat 11 ou la couche de passivation 12 ou le collecteur de courant 13.

Selon un autre mode de réalisation particulier représenté à la figure 4, l'électrolyte solide 15 recouvre la face principale 19 de la première électrode 14 et se prolonge latéralement au-delà de la face principale 19 sans recouvrir au moins une face latérale 14a de la première électrode 14. L'électrolyte solide 15 peut se prolonger seulement au-delà d'un bord de la première l'électrode 14 ou au-delà de plusieurs de ses bords (bords droit et gauche de la figure 4).

Comparativement à une architecture symétrique, les architectures décrites ci-dessus favorisent les échanges entre les ions Li⁺ et la seconde électrode 16 tout en évitant le risque de diffusion d'espèces entre l'électrolyte solide 15 et le substrat 11 ou le collecteur de courant 13.

Le procédé de fabrication de la microbatterie au lithium comporte successivement :
- le dépôt pleine plaque, sur le substrat 11, de la première électrode 14 puis de l'électrolyte solide 15 et d'au moins une couche mince pour former l'ensemble seconde électrode 16/collecteur de courant 17,
- la gravure sélective de l'ensemble seconde électrode 16/collecteur de courant 17 et,
- la gravure sélective, par voie humide, de l'électrolyte solide 15 et de la première électrode 14. La gravure par voie humide est réalisée au moyen d'au moins une solution d'attaque aqueuse.

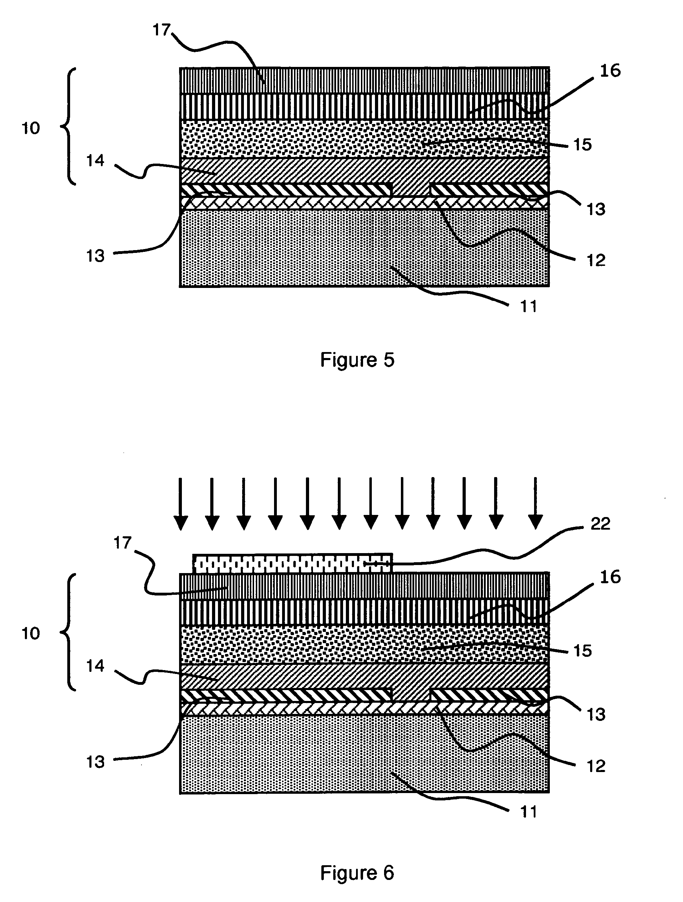

Selon un premier mode de réalisation particulier représenté aux figures 5 à 9, le procédé de fabrication comporte la réalisation, selon tout procédé connu, du collecteur de courant 13 sur le substrat 11 pourvu d'une couche de passivation 12. Le collecteur de courant 13 peut est être obtenu, par exemple, par dépôt CVD ou PVD suivi d'une photolithographie puis d'une gravure par voie humide.

Comme représenté à la figure 5, la première électrode 14, l'électrolyte solide 15, la seconde électrode 16 et le collecteur de courant 17 sont ensuite déposés pleine plaque par tout procédé connu, par exemple, par dépôt PVD ou CVD, successivement sur le substrat 11, sous forme de couches minces. La couche mince formant la première électrode 14 recouvre alors le collecteur de courant 13. L'épaisseur des couches minces est typiquement comprise entre 0,1 µm à 5µm.

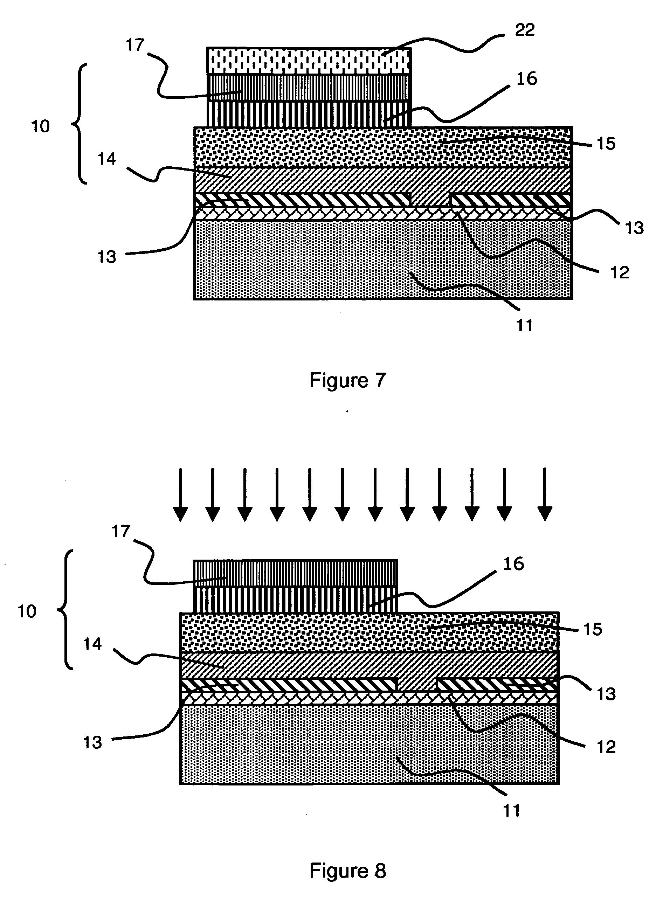

L'ensemble seconde électrode 16/ collecteur de courant 17 comportant une couche mince constituant la seconde électrode 16 et une couche mince constituant le collecteur de courant 17, les couches minces correspondantes sont gravées, simultanément, à travers au moins un masque 22. Le masque 22, représenté à la figure 6, qui comporte l'intégralité du motif de la microbatterie, est réalisé, de préférence par photolithographie, sur le collecteur de courant 17. Le motif défini par le masque 22 est ensuite transféré dans le collecteur de courant 17 par une gravure sélective, représentée schématiquement par les flèches verticales à la figure 6. Le transfert du motif est, avantageusement, réalisé consécutivement dans le collecteur de courant 17 puis dans la seconde électrode 16. Le collecteur de courant 17 et la seconde électrode 16 sont, par conséquent, gravés simultanément à travers le masque 22. Le masque 22 est ensuite éliminé selon des techniques connues propres à la nature du masque 22 (Figure 7).

Selon une variante, les couches minces constituant le collecteur de courant 17 et la seconde électrode 16 sont gravés par deux gravures consécutives différentes, par exemple, une gravure par voie humide sélective par rapport au collecteur de courant 17 puis une gravure par voie sèche, sélective par rapport à la seconde électrode16. On peut, également, envisager deux gravures consécutives par voie humide utilisant respectivement des solutions d'attaque chimique différentes. Un second masque non représenté obtenu, de préférence par photolithographie, peut également être utilisé pour graver sélectivement la seconde électrode 16.

Selon une autre variante non représentée, le masque 22 et/ou le second masque restant après la gravure sélective du collecteur de courant 17 et/ou de la seconde électrode 16 sont, avantageusement, éliminés lors de l'étape ultérieure de gravure sélective par voie humide et ne nécessitent pas d'étapes spécifiques de traitement.

Selon un mode de réalisation préférentiel, la gravure sélective de l'ensemble seconde électrode 16/collecteur de courant 17 est réalisée par voie sèche, par exemple, par gravure ionique réactive ("reactive ion etching", RIE) et/ou par voie humide. Cette gravure par voie sèche permet une meilleure définition des motifs et présente une bonne sélectivité de gravure.

Comme représenté à la figure 8, l'électrolyte solide 15 et la première électrode 14, sont ensuite gravés sélectivement par voie humide, selon tout procédé connu, en utilisant une solution d'attaque aqueuse. La seconde électrode 16 ne doit pas être constituée essentiellement de lithium métallique car ce dernier est trop réactif vis-à-vis de la solution d'attaque aqueuse.

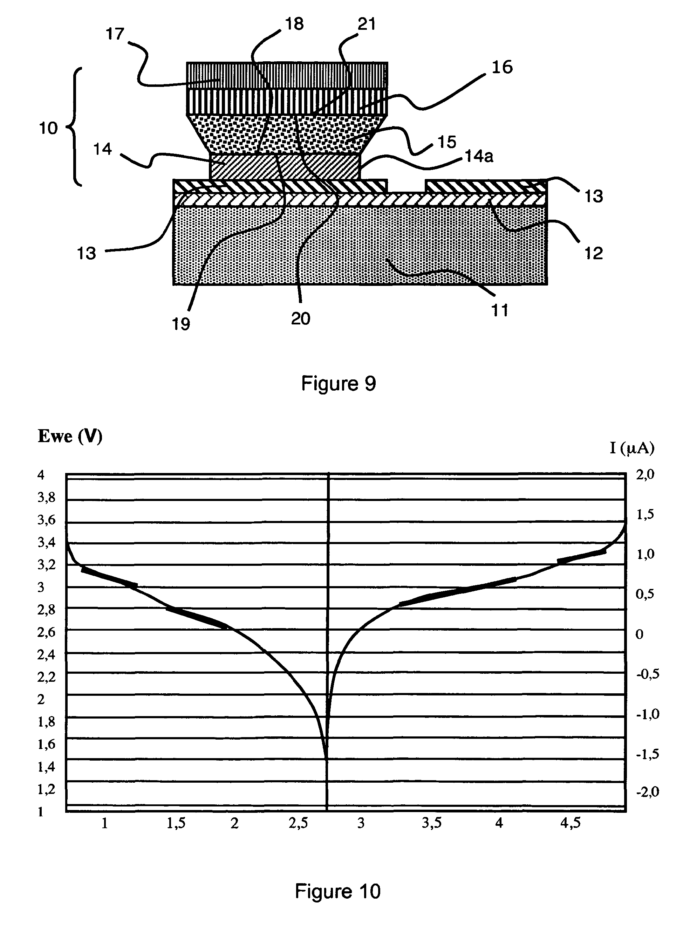

La gravure par voie humide est sélective par rapport à l'électrolyte solide 15 et la première électrode 14 (figure 8). Le collecteur de courant 17 et/ou la seconde électrode 16 ont une fonction de masque dur pour cette étape de gravure. Le motif est transféré dans l'électrolyte solide 15 et la première électrode 14 (figure 9).

La nature aqueuse de la solution d'attaque chimique utilisée pour cette gravure sélective permet d'obtenir une forme de l'électrolyte solide 15 caractéristique (figure 9). Comme décrit précédemment, les dimensions de la première face 18 de l'électrolyte 15 sont sensiblement égales aux dimensions de la face principale 19 de la première électrode 14 et les dimensions de la seconde face 20 de l'électrolyte 15 sont sensiblement égales aux dimensions de la face principale 21 de l'ensemble seconde électrode 16/collecteur de courant 17 et, les dimensions de la première face 18 de l'électrolyte 15 sont également inférieures aux dimensions de la seconde face 20 de l'électrolyte 15.

Selon la nature de la solution d'attaque, la gravure sélective par voie humide de l'électrolyte solide 15 et de la première électrode 14 est, avantageusement, isotopique avec des vitesses de gravure latérale différentes selon les matériaux. Ainsi, l'électrolyte solide 15 a, en coupe, une forme trapézoïdale avec une petite base et une grande base constituant, respectivement, la première et la seconde face, respectivement 18 et 20, de l'électrolyte 15 (figure 9).

Selon une variante non représentée, la première électrode 14 a également, en coupe, une forme trapézoïdale avec une petite base et une grande base constituant, respectivement, une interface formée entre le collecteur de courant 13 et la première électrode 14 et, une interface formée entre la première électrode 14 et l'électrolyte solide 15.

La gravure de l'électrolyte solide 15 est, de préférence, réalisée par une solution aqueuse basique et l'électrolyte solide 15 est, avantageusement, un composé à base de lithium, par exemple LiPON.

L'électrolyte solide 15 et la première électrode 14 sont, de préférence, gravés simultanément par voie humide. Ainsi, pour l'élaboration des éléments constitutifs de la microbatterie, le nombre d'étape de masquage peut être réduit à une seule étape, l'étape de masquage pour la gravure sélective de l'ensemble seconde électrode 16/collecteur de courant 17. Ce procédé permet de protéger les interfaces fonctionnelles de la microbatterie lors des gravures successives, grâce à la présence du collecteur de courant 17.

On choisira, de préférence, des collecteurs de courant 13 et 17 peu sensibles aux solutions d'attaque utilisées.

Lorsqu'une électrode est formée par un oxyde mixte à base de lithium, une étape de recuit thermique est parfois nécessaire pour augmenter la cristallisation de la couche mince constituant l'électrode et améliorer ainsi sa capacité d'insertion. Pour la première électrode 14, cette étape de recuit peut être réalisée après le dépôt pleine plaque de la couche mince constituant l'électrode.

L'empilement 10 est finalement encapsulé par un revêtement 23 et la reprise de contact 24 est réalisée par tout procédé connu, par exemple, par ablation laser (figure 2).

Selon un second mode de réalisation particulier, la microbatterie est une microbatterie "Li free". Avant la première charge de la microbatterie, l'ensemble seconde électrode 16/collecteur de courant 17 est formé initialement par une couche mince. Cette dernière est constituée par un métal ou un alliage métallique et est dépourvue de lithium métallique. Cette couche mince constitue une couche de placage pour un dépôt électrolytique de lithium métallique. Le dépôt de lithium est alors activé lors d'une charge de la microbatterie. Comme décrit dans le document US-B-6168884, avant sa mise en charge initiale, la microbatterie ne comporte pas de couche mince en lithium métallique constituant la seconde électrode 16. Cette dernière est formée par le dépôt électrolytique de lithium métallique lors de la charge de la microbatterie. Après la première charge de la microbatterie, l'ensemble seconde électrode 16/collecteur de courant 17 est formé d'une couche mince constituant le collecteur de courant 17 et d'une couche mince en lithium métallique constituant la seconde électrode 16 (figure 2).

Le procédé de fabrication d'une microbatterie selon le second mode de réalisation particulier est identique au premier mode de réalisation décrit ci-dessus, à l'exception du fait qu'avant la première charge de la microbatterie, la seconde électrode 16 et le collecteur de courant 17 étant constitués par une seule couche mince, la gravure est sélective uniquement vis-à-vis du matériau constituant cette couche mince.

Pour le premier mode de réalisation particulier décrit ci-dessus, c'est-à-dire lorsque l'ensemble seconde électrode 16/collecteur de courant 17 est formé de deux couches minces, l'une constituant la seconde électrode 16 et l'autre le collecteur de courant 17, la seconde électrode 16 ne doit pas être constituée essentiellement de lithium métallique et le collecteur de courant 17 peut être en métal ou en alliage métallique. En revanche, pour le second mode de réalisation c'est-à-dire dans le cas de microbatterie sans lithium métallique (en anglais "Li free"), on obtient par ce procédé, après la première charge, une microbatterie ayant une seconde électrode 16 en lithium métallique. En effet, la couche mince en lithium métallique se forme après la première charge de la microbatterie entre l'électrolyte solide 15 et l'ensemble seconde électrode 16/collecteur de courant 17. La couche mince en lithium métallique constitue alors la seconde électrode 16 et la couche mince formant initialement l'ensemble seconde électrode 16/collecteur de courant 17 constitue alors le collecteur de courant 17 et peut être en métal ou en alliage métallique. Lors du procédé de fabrication de la microbatterie "Li free", le lithium métallique n'est à aucun moment présent et la solution d'attaque aqueuse n'est également jamais en contact avec du lithium métallique.

Selon un troisième mode de réalisation particulier non représenté, l'ensemble seconde électrode 16 /collecteur de courant 17 est constitué par une seule couche mince. Cette couche mince unique joue le rôle à la fois d'électrode et de collecteur de courant. L'ensemble seconde électrode 16/collecteur de courant 17 peut être formé par une couche mince en métal ou en alliage métallique, dépourvue de lithium métallique.

L'invention ne se limite pas aux modes de réalisation décrit ci-dessus. Notamment, une microbatterie peut être réalisée avec une première électrode 14 couvrant tout ou partie du collecteur de courant 13.

Dans tous les cas avant la première charge de la microbatterie, l'ensemble seconde électrode 16/collecteur de courant 17 n'est pas constitué essentiellement de lithium métallique.

### Exemple

Une microbatterie au lithium ayant une architecture optimisée a été réalisée selon le procédé de fabrication de l'invention. Un empilement 10 est obtenu sur un substrat 11 de Silicium 4" avec une bicouche de passivation 12, SiO₂ + Si₃N₄. Le collecteur de courant 13 est constitué par dépôt d'une couche mince de tungstène de 250nm d'épaisseur, par photolithographie suivi d'une gravure par voie humide, par immersion dans un bain de Tungsten Etch □ commercialisé par Micropur Technic, durant 2 min à 25°C. Un dépôt pleine plaque est ensuite réalisé successivement pour la formation des couches minces suivantes :
- LiV₂O₅ de 1 µm d'épaisseur constituant la première électrode 14,
- LiPON de 1.5 µm d'épaisseur constituant l'électrolyte solide 15,
- Si de 0.1 µm d'épaisseur constituant la seconde électrode 16,
- Ti de 0.25 µm d'épaisseur constituant le collecteur de courant 17.

La gravure simultanée du collecteur de courant 17 et de la seconde électrode 16 Ti/Si est ensuite effectuée par gravure ionique réactive avec un plasma SF₆ dans un réacteur RIE ("Reactive Ion Etching") sous les conditions suivantes: pression de 25 mTorr; puissance source de 100W, tension d'auto-polarisation de 180 V, température de 80°C, débit de SF₆ de 25 sccm pendant 300 sec..

La gravure par voie humide, simultanément de l'électrolyte solide 15 et de la première électrode 14, LiPON/LiV₂O₅, est effectuée avec une solution d'attaque chimique aqueuse et basique. Cette solution est réalisée en mélangeant cinq volumes d'eau et un volume ammoniac, à 25°C, pendant 30 secondes.

L'empilement 10 ainsi constitué est encapsulé par dépôt d'une résine polymère photosensible de type époxyde suivi d'une photolithographie.

Enfin, pour la reprise de contact au niveau de la seconde électrode 16, un dépôt de Ti est réalisé par "lift-off" autoaligné avec une résine polymère photosensible positive S1828 commercialisée par Shipley et un développeur standard de type MF319 commercialisé par Shipley.

La microbatterie au lithium obtenue présente une dimension de 5x5mm□ avec une forme trapézoïdale de l'électrolyte solide 15 et une dimension caractéristique □d de 100µm répartie uniformément sur tout le contour de l'électrolyte solide 15.

La figure 10 correspond à un cyclage en mode galvanostatique d'une microbatterie réalisée selon l'exemple décrit ci-dessus. L'allure de la courbe de charge et de décharge correspond aux couples rédox utilisés. On note en particulier la présence de paliers de potentiels à 3.2V et 2.8V, qui traduisent les transformations de phase dans le LiV₂O₅ pendant le processus d'insertion du lithium. On observe des paliers de potentiels en charge et en décharge qui témoignent des faibles contraintes mécaniques en jeu.

Il est connu que les solutions aqueuses risquent d'altérer les matériaux à base de lithium. L'ensemble de l'art antérieur dissuade, d'ailleurs, d'utiliser de telles solutions d'attaque pour la gravure par voie humide de microbatterie au lithium, notamment le document US-A-2008032236. Néanmoins, de façon surprenante, on obtient une architecture de microbatterie avec des performances électrochimiques optimisées.

De plus, contrairement aux procédés de fabrication selon l'art antérieur qui nécessitent plusieurs étapes, souvent complexes, de dépôt et de gravure des différentes couches formant la microbatterie au lithium, le procédé de fabrication selon l'invention est facile à mettre en oeuvre et simple. De façon caractéristique, le procédé de fabrication utilise une solution de gravure aqueuse et une seule étape de masquage photolithographique.

Un tel procédé de fabrication d'une microbatterie au lithium est compatible avec les technologies mises en oeuvre dans le domaine de la microélectronique, ce qui permet, notamment, d'incorporer une telle microbatterie au lithium sur un micro-composant et de réduire les coûts de fabrication.

La microbatterie selon l'invention trouve de nombreuses applications industrielles notamment dans le domaine de la microélectronique où la miniaturisation des composants et les besoins en autonomie imposent l'utilisation d'accumulateurs plus petits, plus puissants et ayant des durées de vie plus longues. L'utilisation d'une microbatterie selon l'invention est, notamment, préconisée pour des systèmes où les contraintes de place sont importantes, notamment en microélectronique, dans la constitution, par exemple, de cartes à puces, d'étiquettes "intelligentes", d'outils de communication miniaturisés tels que les téléphones, les micro-ordinateurs portables, ou pour l'alimentation d'horloges internes et de microsystèmes.

## Revendications

1. Microbatterie au lithium formée d'un empilement (10) de couches minces solides sur un substrat (11), ledit empilement (10) comportant, successivement et en partant du substrat (11), une première électrode (14), un électrolyte solide (15) et un ensemble seconde électrode (16)/collecteur de courant (17) formé d'au moins une couche mince, une première face et une seconde face de l'électrolyte (18, 20) étant en contact, respectivement, avec une face principale (19) de la première électrode (14) et une face principale (21) de l'ensemble seconde électrode (16)/collecteur de courant (17), lesdites faces principales (19, 21) étant en regard l'une par rapport à l'autre et, les dimensions de la face principale (19) de la première électrode (14) étant inférieures aux dimensions de la face principale (21) dudit ensemble,
microbatterie **caractérisée en ce que** les dimensions de la première face (18) de l'électrolyte solide (15) sont inférieures aux dimensions de la seconde face (20) de l'électrolyte solide (15) et **en ce que** l'électrolyte solide (15) n'est pas en contact avec le substrat (11).

2. Microbatterie selon la revendication 1, **caractérisée en ce que** la première électrode (14) ayant au moins une face latérale (14a), aucune face latérale (14a) n'est entièrement recouverte par l'électrolyte solide (15).

3. Microbatterie selon l'une des revendications 1 et 2, **caractérisée en ce que** les dimensions de la première face (18) de l'électrolyte (15) sont sensiblement égales aux dimensions de la face principale (19) de la première électrode (14) et les dimensions de la seconde face (20) de l'électrolyte (15) sont sensiblement égales aux dimensions de la face principale (21) de l'ensemble seconde électrode (16)/collecteur de courant (17), et **en ce que** les dimensions de la première face (18) de l'électrolyte (15) sont inférieures aux dimensions de la seconde face (20) de l'électrolyte (15).

4. Microbatterie selon l'une quelconque des revendications 1 à 3, **caractérisée en ce que** l'électrolyte solide (15) a, en coupe, une forme trapézoïdale avec une petite base et une grande base constituant, respectivement, la première et la seconde face (18, 20) de l'électrolyte (15).

5. Microbatterie selon l'une quelconque des revendications 1 à 4, **caractérisée en ce qu'**une différence (□d) entre un diamètre, une largeur ou une longueur de la première face (18) de l'électrolyte (15) et, un diamètre, une largeur ou une longueur correspondant de la seconde face (20) de l'électrolyte (15) est comprise entre 0,2µm et 2000µm.

6. Microbatterie selon l'une quelconque des revendications 1 à 5, **caractérisée en ce que** l'électrolyte solide (15) est un composé à base de lithium.

7. Microbatterie selon l'une quelconque des revendications 1 à 6, **caractérisée en ce que** l'ensemble seconde électrode (16)/ collecteur de courant (17) comporte une couche mince constituant la seconde électrode (16) et une couche mince constituant le collecteur de courant (17).

8. Microbatterie selon la revendication 7, **caractérisée en ce que** la seconde électrode (16) est constituée d'un ou de plusieurs matériaux choisis parmi les métaux de transition et leurs alliages, les métalloïdes et leurs alliages, et les matériaux d'intercalation et d'insertion du lithium.

9. Microbatterie selon l'une quelconque des revendications 1 à 8, **caractérisée en ce que** l'ensemble seconde électrode (16)/ collecteur de courant (17) est constitué par une seule couche mince.

10. Microbatterie selon l'une quelconque des revendication 7 à 9, **caractérisée en ce que** le collecteur de courant (17) ou l'ensemble seconde électrode (16)/ collecteur de courant (17) est constitué par une seule couche mince en métal ou en alliage métallique.

11. Procédé de fabrication d'une microbatterie au lithium selon l'une quelconque des revendications 1 à 10, **caractérisé en ce qu'**il comporte successivement :
- le dépôt pleine plaque, sur le substrat (11), de la première électrode (14) puis de l'électrolyte solide (15) et d'au moins une couche mince pour former l'ensemble seconde électrode (16)/collecteur de courant (17),
- la gravure sélective dudit ensemble et,
- la gravure sélective, par voie humide, de l'électrolyte solide (15) et de la première électrode (14), ladite gravure par voie humide étant réalisée au moyen d'au moins une solution d'attaque aqueuse.

12. Procédé selon la revendication 11, **caractérisé en ce que** l'électrolyte solide (15) et la première électrode (14) sont gravés simultanément par voie humide.

13. Procédé selon l'une des revendications 11 et 12, **caractérisé en ce que** l'ensemble seconde électrode (16)/collecteur de courant (17) comportant une couche mince constituant la seconde électrode (16) et une couche mince constituant le collecteur de courant (17), lesdites couches minces sont gravées, simultanément, à travers au moins un masque (22).

14. Procédé selon l'une quelconque des revendications 11 à 13, **caractérisé en ce que** l'électrolyte solide (15) est un composé à base de lithium et la solution d'attaque aqueuse est une solution basique.

15. Procédé selon l'une quelconque des revendications 11 à 14, **caractérisé en ce que** la gravure sélective de l'ensemble seconde électrode(16)/collecteur de courant (17) est une gravure par voie sèche.

## Patentansprüche

1. Lithium-Mikrobatterie, die von einem Stapel (10) aus festen dünnen Schichten auf einem Substrat (11) gebildet ist, wobei der Stapel (10) nacheinander und von dem Substrat (11) ausgehend eine erste Elektrode (14), einen festen Elektrolyten (15) und eine Anordnung aus zweiter Elektrode (16)/Stromkollektor (17), die von wenigstens einer dünnen Schicht gebildet ist, umfasst, wobei eine erste Seite und eine zweite Seite des Elektrolyten (18, 20) mit einer Hauptseite (19) der ersten Elektrode (14) bzw. einer Hauptseite (21) der Anordnung aus zweiter Elektrode (16)/Stromkollektor (17) in Kontakt sind, wobei die Hauptseiten (19, 21) einander gegenüberliegen und wobei die Abmessungen der Hauptseite (19) der ersten Elektrode (14) kleiner als die Abmessungen der Hauptseite (21) der Anordnung sind,
Microbatterie, **dadurch gekennzeichnet, dass** die Abmessungen der ersten Seite (18) des festen Elektrolyten (15) kleiner als die Abmessungen der zweiten Seite (20) des festen Elektrolyten (15) sind und dass der feste Elektrolyt (15) nicht mit dem Substrat (11) in Kontakt ist.

2. Microbatterie nach Anspruch 1, **dadurch gekennzeichnet, dass**, da die erste Elektrode (14) wenigstens eine Seitenfläche (14a) hat, wobei keine Seitenfläche (14a) vollständig durch den festen Elektrolyten (15) bedeckt ist.

3. Mikrobatterie nach einem der Ansprüche 1 und 2, **dadurch gekennzeichnet, dass** die Abmessungen der ersten Seite (18) des Elektrolyten (15) im Wesentlichen gleich den Abmessungen der Hauptseite (19) der ersten Elektrode (14) sind und die Abmessungen der zweiten Seite (20) des Elektrolyten (15) im Wesentlichen gleich den Abmessungen der Hauptseite (21) der Anordnung aus zweiter Elektrode (16)/Stromkollektor (17) sind, und dass die Abmessungen der ersten Seite (18) des Elektrolyten (15) kleiner als die Abmessungen der zweiten Seite (20) des Elektrolyten (15) sind.

4. Microbatterie nach einem der Ansprüche 1 bis 3, **dadurch gekennzeichnet, dass** der feste Elektrolyt (15) im Schnitt eine Trapezform aufweist, mit einer kleinen Grundseite und einer großen Grundseite, die die erste bzw. die zweite Seite (18, 20) des Elektrolyten (15) bilden.

5. Mikrobatterie nach einem der Ansprüche 1 bis 4, **dadurch gekennzeichnet, dass** eine Differenz (□d) zwischen einem Durchmesser, einer Breite oder einer Länge der ersten Seite (18) des Elektrolyten (15) und einem/einer entsprechenden Durchmesser, Breite oder Länge der zweiten Seite (20) des Elektrolyten (15) zwischen 0,2 µm und 2000 µm beträgt.

6. Mikrobatterie nach einem der Ansprüche 1 bis 5, **dadurch gekennzeichnet, dass** der feste Elektrolyt (15) eine Verbindung auf der Basis von Lithium ist.

7. Mikrobatterie nach einem der Ansprüche 1 bis 6, **dadurch gekennzeichnet, dass** die Anordnung aus zweiter Elektrode (16)/Stromkollektor (17) eine dünne Schicht, welche die zweite Elektrode (16) bildet, sowie eine dünne Schicht, welche den Stromkollektor (17) bildet, umfasst.

8. Microbatterie nach Anspruch 7, **dadurch gekennzeichnet, dass** die zweite Elektrode (16) von einem oder mehreren Materialien, die aus den Übergangsmetallen und deren Legierungen, den Metalloiden und deren Legierungen sowie den Lithium-Einlagerungs- und -Einbettungsmaterialien ausgewählt sind, gebildet ist.

9. Mikrobatterie nach einem der Ansprüche 1 bis 8, **dadurch gekennzeichnet, dass** die Anordnung aus zweiter Elektrode (16)/Stromkollektor (17) von einer einzigen dünnen Schicht gebildet ist.

10. Mikrobatterie nach einem der Ansprüche 7 bis 9, **dadurch gekennzeichnet, dass** der Stromkollektor (17) oder die Anordnung aus zweiter Elektrode (16)/Stromkollektor (17) von einer einzigen dünnen Schicht aus Metall oder aus Metallegierung gebildet ist.

11. Verfahren zur Herstellung einer Lithium-Mikrobatterie nach einem der Ansprüche 1 bis 10, **dadurch gekennzeichnet, dass** es nacheinander umfasst:
- Abscheiden auf dem Substrat (11), über die vollständige Platte, der ersten Elektrode (14), dann des festen Elektrolyten (15) und wenigstens einer dünnen Schicht, um die Anordnung aus zweiter Elektrode (16)/Stromkollektor (17) zu bilden,
- selektives Ätzen der Anordnung und
- selektives Nassätzen des festen Elektrolyten (15) und der ersten Elektrode (14), wobei das Nassätzen mittels wenigstens einer wässrigen Ätzlösung durchgerührt wird.

12. Verfahren nach Anspruch 11, **dadurch gekennzeichnet, dass** der feste Elektrolyt (15) und die erste Elektrode (14) gleichzeitig nassgeätzt werden.

13. Verfahren nach einem der Ansprüche 11 und 12, **dadurch gekennzeichnet, dass** wenn die Anordnung aus zweiter Elektrode (16)/Stromkollektor (17) eine dünne Schicht, welche die zweite Elektrode (16) bildet, und eine dünne Schicht, welche den Stromkollektor (17) bildet, umfasst, die dünnen Schichten gleichzeitig durch wenigstens eine Maske (22) hindurch geätzt werden.

14. Verfahren nach einem der Ansprüche 11 bis 13, **dadurch gekennzeichnet, dass** der feste Elektrolyt (15) eine Verbindung auf der Basis von Lithium ist und die wässrige Ätzlösung eine basische Lösung ist.

15. Verfahren nach einem der Ansprüche 11 bis 14, **dadurch gekennzeichnet, dass** das selektive Ätzen der Anordnung aus zweiter Elektrode (16)/Stromkollektor (17) ein Trockenätzen ist.

## Claims

1. A lithium microbattery formed by a stack (10) of solid thin layers on a substrate (11), said stack (10) successively comprising, starting from the substrate (11), a first electrode (14), a solid electrolyte (15) and a second electrode (16)/current collector (17) assembly formed by at least one thin layer, a first surface and a second surface of the electrolyte (18, 20) being in contact respectively with a main surface (19) of the first electrode (14) and a main surface (21) of the second electrode (16)/current collector (17) assembly, said main surfaces (19, 21) being facing one another and the dimensions of the main surface (19) of the first electrode (14) being smaller than the dimensions of the main surface (21) of said assembly,
a microbattery **characterized in that** the dimensions of the first surface (18) of the solid electrolyte (15) are smaller than the dimensions of the second surface (20) of the solid electrolyte (15) and **in that** the solid electrolyte (15) is not in contact with the substrate (11).

2. The microbattery according to claim 1, **characterized in that** the first electrode (14) having at least one lateral surface (14a), no lateral surface (14a) is completely covered by the solid electrolyte (15).

3. The microbattery according to one of claims 1 and 2, **characterized in that** the dimensions of the first surface (18) of the electrolyte (15) are substantially equal to the dimensions of the main surface (19) of the first electrode (14) and the dimensions of the second surface (20) of the electrolyte (15) are substantially equal to the dimensions of the main surface (21) of the second electrode (16)/current collector (17) assembly, and **in that** the dimensions of the first surface (18) of the electrolyte (15) are smaller than the dimensions of the second surface (20) of the electrolyte (15).

4. The microbattery according to any one of claims 1 to 3, **characterized in that** the solid electrolyte (15) has a trapezoid shape, in cross-section, with a small base and a large base respectively constituting the first and second surface (18, 20) of the electrolyte (15).

5. The microbattery according to any one of claims 1 to 4, **characterized in that** a difference (Δd) between a diameter, width or length of the first surface (18) of the electrolyte (15) and a corresponding diameter, width or length of the second surface (20) of the electrolyte (15) is comprised between 0.2µm and 2000µm.

6. The microbattery according to any one of claims 1 to 5, **characterized in that** the solid electrolyte (15) is a lithium-base compound.

7. The microbattery according to any one of claims 1 to 6, **characterized in that** the second electrode (16)/ current collector (17) assembly comprises a thin layer constituting the second electrode (16) and a thin layer constituting the current collector (17).

8. The microbattery according to claim 7, **characterized in that** the second electrode (16) consists of one or more materials chosen from transition metals and their alloys, metalloids and their alloys, and lithium intercalation and insertion materials.

9. The microbattery according to any one of claims 1 to 8, **characterized in that** the second electrode (16)/ current collector (17) assembly consists of a single thin layer.

10. The microbattery according to any one of claims 7 to 9, **characterized in that** the current collector (17) or the second electrode (16)/ current collector (17) assembly consists of a single thin layer made from metal or from metal alloy.

11. A fabrication method of a lithium microbattery according to any one of claims 1 to 10, **characterized in that** it successively comprises:
- full wafer deposition, on the substrate (11), of the first electrode (14) and then of the solid electrolyte (15) and of at least one thin layer to form the second electrode (16)/current collector (17) assembly,
- selective etching of said assembly and,
- selective etching, by wet process, of the solid electrolyte (15) and of the first electrode (14), said wet etching being performed by means of at least one aqueous etching solution.

12. The method according to claim 11, **characterized in that** the solid electrolyte (15) and the first electrode (14) are etched simultaneously by wet process.

13. The method according to one of claims 11 and 12, **characterized in that** the second electrode (16)/current collector (17) assembly comprising a thin layer constituting the second electrode (16) and a thin layer constituting the current collector (17), said thin layers are etched simultaneously through at least one mask (22).

14. The method according to any one of claims 11 to 13, **characterized in that** the solid electrolyte (15) is a lithium-base compound and the aqueous etching solution is an alkaline solution.

15. The method according to any one of claims 11 to 14, **characterized in that** selective etching of the second electrode (16)/current collector (17) assembly is a dry process etching.
